# EUROPEAN PATENT APPLICATION

(11) **EP 1 958 742 A1**
(43) Date of publication of application: **20.08.2008**
(21) Application number: 08250460.6
(22) Date of filing: 07.02.2008
(51) Int. Cl.: B26D 7/02

(54) **Holding down food products in slicing machines**

(30) Priority: 15.02.2007 GB 0702953
(71) Applicant: AEW Delford Systems Limited, Norwich NR7 9BB (GB)
(72) Inventor: Culling, Alan, Norwich Norfolk NR12 8AY (GB)
(74) Representative: Sharrock, Daniel John

(57) **Abstract**

Apparatus is provided for holding down food products (4) such as bacon, cheese or cooked meat in a slicing machine. The apparatus comprises a device (3) engaging the top of the food product and a parallel motion linkage (2) having one end pivotally mountable in the machine and the other end connected to the device. When the linkage is rotated about its pivotable mounting, the device moves substantially perpendicular with respect to a plane on which the food product is supported. This enables the device not only to be raised and lowed when slicing of one product has been completed and slicing of the next food product is to commence, but also to accommodate variations in the thickness and a single product between products.

## Description

### Field of the Invention

This invention relates to holding down food products (such as bacon, cheese or cooked meat) in slicing machines.

### Background to the Invention

It is desirable to constrain food products at the point of slicing and as close as possible to the slicing action. Existing holding down apparatus have manually adjustable, sprung or pneumatically operated fingers or rollers pressing on top of the food product. They are manually adjustable in order to cope with the range of heights of food products. The sprung action imparts a rotating motion which is only ideal for uniformly sized products at the optimum height. For products of irregular height the known forms of holding down apparatus are not always effective.

### Summary of the Invention

According to the invention there is provided apparatus for holding down a food product in a slicing machine when the food product is supported on a plane defined by the machine, the apparatus comprising a device for engaging the top of the food product, a parallel motion linkage having one end pivotally mountable in the machine and the other end connected to the device, so that when the linkage is rotated about its pivotal mounting the device moves substantially perpendicularly with respect to said plane between raised and lowered positions, enabling the device not only to be raised and lowered when slicing of one product has been completed and slicing of the next food product is to commence but also to accommodate variations in thickness in a single product and between products.

The apparatus may include a pneumatic cylinder which is operative to rotate the linkage to raise and lower the device and to maintain predetermined pressure on the food product during slicing.

The pneumatic cylinder provides the operating power and avoids the need for manual adjustment. The device is raised and lowered as each product is loaded onto the machine, so that minimum height through to maximum height products can be sliced.

The device may comprise a plurality of fingers which engage the product with a resilient holding down force, and this is preferably achieved by each finger being mounted at the end of the parallel motion linkage by means of a spring which imparts the resilience. Rollers (freely rotating or powered) can be used instead of fingers.

In the embodiment to be described, the parallel motion linkage comprises a first link one end of which is pivotally mounted in the machine at a first pivot point, a second link one end of which is pivotally mounted in the machine at a second pivot point above the first pivot point, the first link extending away from the first pivot point to the other end of the first link and the second link extending generally parallel to the first link and away from the second pivot point to the other end of the second link, and a third link one end of which is pivotally connected to the other end of the second link and the other end of which carries the device, the other end of the first link being pivotally interconnected to the third link at an intermediate point along the length of the third link.

### Brief Description of the Drawings

Apparatus according to the invention will now be described, by way of example, with reference to the accompanying drawings, in which:
Figures 1 and 2 are isometric views of the apparatus in lowered and raised positions, respectively, and
Figures 3 and 4 are side views showing the apparatus being used to hold down products of minimum and maximum thickness respectively in a food slicing machine.

### Detailed Description of the Drawings

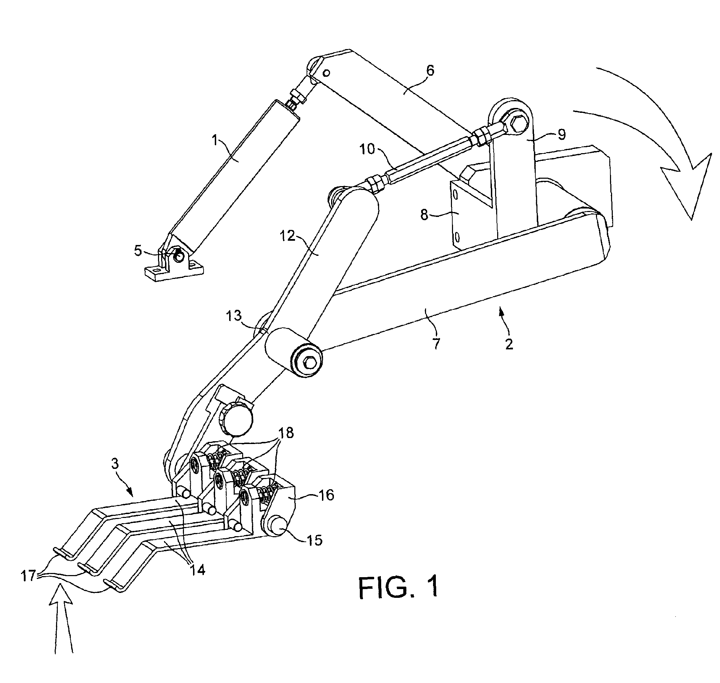

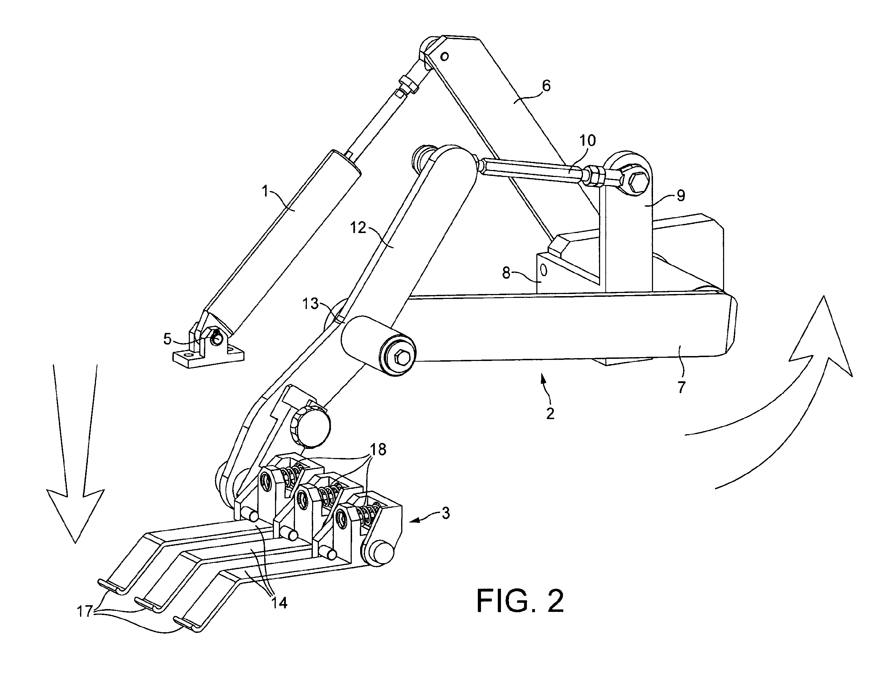

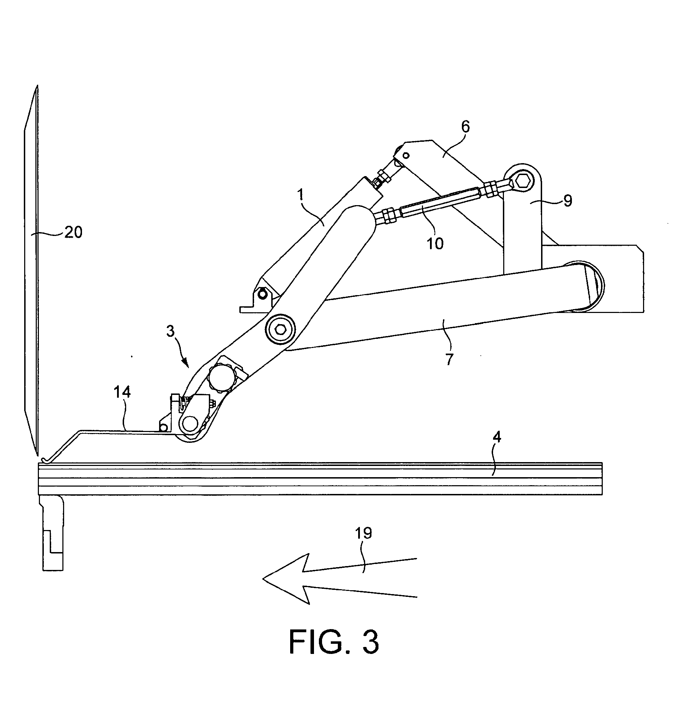

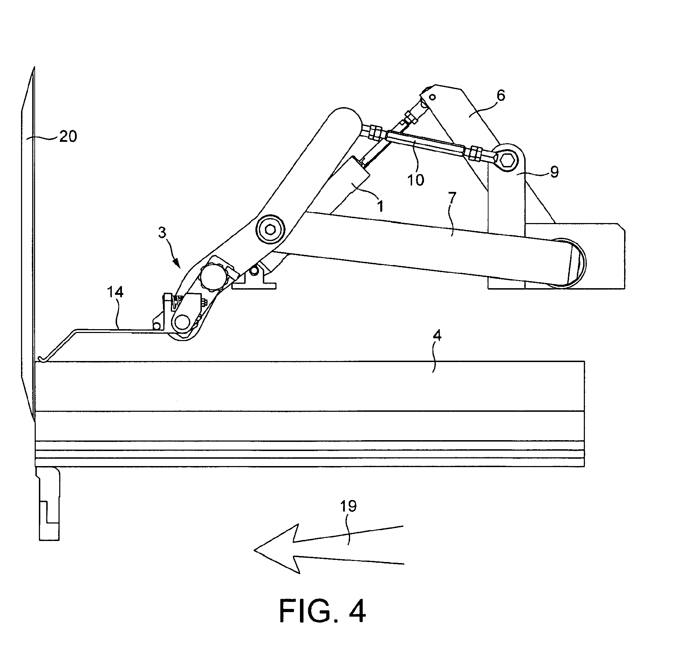

The apparatus comprises a pneumatic piston and cylinder device 1, a parallel motion linkage 2 and a device 3 for engaging the upper surface of a food product 4 (Figures 3 and 4) being sliced. The pneumatic cylinder of the device 1 is pivotally mounted at 5 in the slicing machine and the piston is attached to a piston rod pivotally attached to one end of a lever 6, rotation of which causes the parallel motion linkage 2 to swing between the lowered position illustrated in Figure 1 and the raised position illustrated in Figure 2. The linkage 2 comprises a first link 7, one end of which is pivotally mounted in a bracket 8 attached to the frame of the slicing machine. The lever 6 pivots with the link 7. The bracket 8 has an upstanding lug 9 to which is pivotally mounted one end of a second link 10, the other end of which is pivotally connected to one end of a third link 12, the other end of which carries the device 3. An intermediate point 13 of the link 12 is attached to the other end of the first link 7 in such manner that the links 7 and 10 extend generally horizontally away from their respective pivot points, forming the parallel motion linkage 2.

The device 3 has three horizontally spaced fingers 14 which have inner ends pivotally mounted about a common horizontal axis 15 in a recessed mounting member 16 attached to the end of the third link 12. The fingers 14 have outer downwardly sloping ends terminating in upwardly turned lips so that each finger has a tip 17 presenting a smoothly curved convex surface on its underside for non-snagging engagement with the upper surface of a food product being sliced. The fingers 14 are individually sprung by means of short helical compression springs 18 which bias the fingers 14 to the positions illustrated in Figures 1 and 2 but allow each finger a small amplitude of pivotal motion, against the spring bias, so that each finger is capable of being resiliently deflected to accommodate size variations of the food product in a lateral direction.

Referring to Figures 3 and 4, the apparatus is mounted in a food slicing machine so as to be above the support bed on which the food product 4 (e.g. a bacon log) is supported as the latter is advanced towards a rotating slicing blade 20. The fingers 14 make resilient engagement with the top of the food product 4 being sliced, maintaining a predetermined pressure on the food product during slicing. It can be seen from Figures 3 and 4 that the fingers 14 engage the food product 4 as close as possible to the blade 20.

The food product 4 has a minimum vertical dimension in Figure 3 and a maximum vertical dimension in Figure 4. The holding down apparatus not only accommodates food products within this range of thicknesses, but also accommodates varying thickness in the same food product. In all cases, the parallel motion linkage 2 ensures that the fingers 14 engage the top of the food product 4 near to the slicing blade 20 and that the device 3 moves generally vertically relative to the product to accommodate different thicknesses of product 4.

Gripper apparatus (not shown) moves the food product in the direction of the arrow 19 in Figures 3 and 4 as slicing proceeds, the fingers riding along the top of the food product as slicing takes place. The gripper apparatus then undertakes a return stroke ready for engagement with the trailing end of the next food product to be sliced.

## Claims

1. Apparatus for holding down a food product in a slicing machine when the food product is supported on a plane defined by the machine, the apparatus comprising a device for engaging the top of the food product, a parallel motion linkage having one end pivotally mountable in the machine and the other end connected to the device, so that when the linkage is rotated about its pivotal mounting the device moves substantially perpendicularly with respect to said plane between raised and lowered positions, enabling the device not only to be raised and lowered when slicing of one product has been completed and slicing of the next food product is to commence but also to accommodate variations in thickness in a single product and between products.

2. Apparatus according to claim 1 including a pneumatic cylinder which is operative to rotate the linkage to raise and lower the device and to maintain a predetermined pressure on the food product during slicing.

3. Apparatus according to claim 1 or claim 2, wherein the device comprises a plurality of resilient fingers which engage the food product with a resilient holding down force.

4. Apparatus according to claim 3, wherein each finger is biased by means of a spring which imparts resilience to the finger.

5. Apparatus according to any of the preceding claims, wherein the parallel motion linkage comprises a first link one end of which is pivotally mountable in the machine at a first pivot point, a second link one end of which is pivotally mountable in the machine at a second pivot point above the first pivot point, the first link extending away from the first pivot point to the other end of the first link and the second link extending generally parallel to the first link and away from the second pivot point to the other end of the second link, and a third link one end of which is pivotally connected to the other end of the second link and the other end of which carries the device, the other end of the first link being pivotally connected to the third link at an intermediate point along the length of the third link.

6. A slicing machine including apparatus according to any of the preceding claims, wherein the device is arranged to engage the top of the food product at a position close to a slicing blade of the machine.
